(19) Europäisches Patentamt

European Patent Office

Office européen des brevets

(11) **EP 0 943 864 B1**

(12) **EUROPEAN PATENT SPECIFICATION**

(45) Date of publication and mention
of the grant of the patent:
**20.08.2003 Bulletin 2003/34**

(51) Int Cl.[7]: **F23G 5/50**

(86) International application number:
**PCT/JP97/03519**

(21) Application number: **97942223.5**

(22) Date of filing: **02.10.1997**

(87) International publication number:
**WO 99/018394 (15.04.1999 Gazette 1999/15)**

(54) **COMBUSTION CONTROL METHOD FOR REFUSE INCINERATOR**

VERFAHREN ZUR VERBRENNUNGSREGELUNG EINES ABFALLVERBRENNUNGSOFENS

PROCEDE DE REGULATION DE LA COMBUSTION DANS UN INCINERATEUR DE DECHETS

(84) Designated Contracting States:
**BE DE DK FR GB**

(43) Date of publication of application:
**22.09.1999 Bulletin 1999/38**

(60) Divisional application:
**02078911.1 / 1 267 122**

(73) Proprietor: **NKK CORPORATION**
**Tokyo 100 (JP)**

(72) Inventors:
• **FUJII, Satoshi, NKK Corporation**
**Tokyo 100 (JP)**
• **KURODA, Manabu, NKK Corporation**
**Tokyo 100 (JP)**
• **NOGAMI, Yuichi, NKK Corporation**
**Tokyo 100 (JP)**

(74) Representative:
**Miller, James Lionel Woolverton et al**
**Kilburn & Strode,**
**20 Red Lion Street**
**London WC1R 4PJ (GB)**

(56) References cited:
| | |
|---|---|
| JP-A- 4 208 307 | JP-A- 4 371 712 |
| JP-A- 5 215 318 | JP-A- 7 167 420 |
| JP-A- 51 018 160 | JP-A- 53 009 265 |
| JP-A- 55 035 873 | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates to a combustion control method in which the quantity of supplied refuse and the quantity and temperature of combustion air are adjusted in a refuse incineration furnace utilizing combustion heat of refuse for producing steam power so that the state of combustion is stabilized to obtain a predetermined quantity of produced steam.

BACKGROUND OF THE INVENTION

An urban refuse incineration furnace has an important role in the disposal of various kinds of waste matter discarded in social life. In recent years, a refuse incineration furnace including a boiler power generation equipment has been popularized because of an increasing interest in collection of enormous heat energy produced by incineration of refuse as waste matter. Further, the incineration furnace is required to stabilize the combustion of refuse to thereby keep the vaporization of boiler water constant.

After gathered refuse is stirred in a refuse pit to reduce variation in components, properties, etc., the refuse is delivered to a refuse incineration furnace. In the refuse incineration furnace, the refuse is put into a hopper intermittently at intervals of tens of minutes by a crane. In this occasion, the weight of the refuse is measured by a gravimeter and the height of the refuse in the hopper is measured by a level meter. Further, a drying fire grate is disposed under the hopper. The refuse is continuously fed into the furnace by the drying fire grate. The drying fire grate has both a function of feeding the refuse and a function of drying the refuse. The dried refuse is supplied to a combustion fire grate following the drying fire grate.

To keep the quantity of produced steam constant, the quantity of refuse to be burned is required to be controlled to be constant. Generally, the quantity of incineration corresponding to the necessary quantity of produced steam is calculated on the basis of the actual quantity of produced steam, the actual quantity of supplied combustion air/cooling air and the actual quantity of introduced refuse in the past, so that the target quantity of incineration is set whenever refuse is introduced. Further, the refuse feed speed of the drying fire grate is controlled to make the quantity of incineration approach the target incineration quantity by increasing the drying fire grate speed when the actual quantity of supplied refuse is smaller than the target incineration quantity or by reducing the drying fire grate speed when the actual quantity of supplied refuse is larger than the target incineration quantity.

As a method for quantitatively supplying refuse to make the quantity of supplied refuse equal to the target incineration quantity, conventionally, there are, for example, the following prior art techniques.

(1) A technique in which a refuse weight measuring device is provided in the back of a drying fire grate for supplying refuse into a furnace and in which the weight change of refuse is grasped to correct the quantity of supplied refuse to eliminate the difference from a set value to thereby adjust the quantity of supplied refuse, is described in JP-A-63-113215.

(2) A technique in which a refuse receiver and a weighing device are provided in front of the position where refuse drops from a hopper onto a drying fire grate and in which the weight of refuse on the refuse receiver is measured to thereby adjust the quantity of supplied refuse, is described in JP-B-2-27568.

Although refuse is introduced into the hopper of the incineration furnace after stirred in a refuse pit, the weight and size of refuse are not constant individually. Accordingly, when refuse is introduced into the hopper, refuse on the drying fire grate may be often pushed out suddenly onto the combustion fire grate under the influence of the dropping of the introduced refuse. In this case, because not only the quantity of supplied refuse becomes temporarily excessive but also insufficiently dried refuse is delivered onto the combustion fire grate, the state of combustion is worsened.

That is, the aforementioned prior art is effective in the case where refuse is introduced stably because the feed speed of the drying fire grate is adjusted to feed refuse having predetermined weight while the weight of refuse is measured. However, when refuse is pushed out excessively in a short time as described above, no measure counter to the pushing is provided. Accordingly, there was a problem that the quantity of produced steam varies widely because of the influence of the pushing.

Furthermore, a method according to the preamble of claim 1 is described in JP-A-53-9265.

Further, the properties of refuse are multifarious. For example, inflammable refuse may be supplied after supply of flammable refuse or the case reverse to the above-mentioned case may be made. In this case, the quantity of produced steam does not become constant only when the target quantity of incineration which is determined whenever refuse is introduced is achieved. To keep the quantity of produced steam constant, control is required in accordance with the properties of refuse which change every moment. To solve this problem, there is a method (hereinafter referred to as "produced steam quantity measuring method") in which: the quantity of produced steam is measured; and combustion is controlled so that the quantity of combustion air is reduced when the quantity of produced steam is larger than a target quantity and that the quantity of combustion air is increased when the quantity of produced steam is smaller than the target quantity. There is further proposed a method (hereinafter referred to as "exhaust gas $O_2$ concentration measuring method") in which the concentration of $O_2$ in exhaust gas is measured to control the quantity of combustion air to thereby stabilize the state of combustion. For example, a method in which: the quantity of air supplied to the refuse incineration furnace, the concentration of $O_2$ in exhaust gas and the flow quantity of exhaust gas are measured; an excess air ratio is calculated on the basis of the measured values; the excess air ratio is compared with a standard excess air ratio; and the quantity of combustion air is controlled so that the two ratios coincide with each other, is described in JP-A-6-331123.

In the produced steam quantity measuring method or in the exhaust gas $O_2$ concentration measuring method, however, combustion was not always stable, so that it was often difficult to keep the quantity of produced steam constant. When, for example, bad-quality refuse containing a large amount of water is supplied, not only the quantity of flammable refuse is so small that the quantity of produced steam decreases but also oxygen is not consumed so that the concentration of $O_2$ in exhaust gas increases.

In this occasion, in the produced steam quantity measuring method, the quantity of combustion air is increased to activate combustion. However, even in the case where the quantity of combustion air is increased, combustion air does not contribute to combustion before refuse is dried. Accordingly, combustion air cools the inside of the furnace. As a result, wasteful air is blown to thereby worsen the state of combustion undesirably. Further, in this occasion, in the exhaust gas $O_2$ concentration measuring method, the quantity of combustion air is reduced to obtain the standard excess air ratio. Accordingly, the drying of refuse is delayed, so that the state of combustion is still not improved. As described above, in the aforementioned prior art, the state of combustion cannot be normalized in accordance with the change of the properties of refuse. There was a problem that it was difficult to keep the quantity of produced steam constant.

DISCLOSURE OF THE INVENTION

An object of the present invention is to provide a combustion control method in a refuse incineration furnace utilizing the combustion heat of refuse for producing steam power, in which the state of combustion is stabilized so that a predetermined quantity of produced stream can be obtained.

(1) According to an aspect of the present invention, provided is a combustion control method in a refuse incineration furnace comprising the steps of: obtaining the weight of introduced refuse and the level change between levels before and after introduction of refuse on the basis of values measured by means of a refuse gravimeter attached to a refuse-introduction crane and a refuse level meter for measuring the surface height of refuse in a refuse incineration furnace hopper; and controlling the speed of a drying fire grate for feeding refuse into the furnace on the basis of a result of comparison of the thus obtained weight and level change of refuse with those obtained in a plurality of times in the past up to the preceding time.

The weight of introduced refuse is measured by a gravimeter attached to a crane. The volume of refuse is obtained on the basis of the level change between levels before and after introduction, that is, the difference between the surface height just before introduction and the surface height just after introduction, and the sectional area of the hopper. Generally, the weight of refuse and the level change have a predetermined relation with each other because the volume of refuse is substantially proportional to the weight thereof. However, refuse on the drying fire grate may be often pushed out onto the combustion fire grate under the influence of dropping of refuse when refuse is introduced into the hopper. In this case, the surface height measured just before introduction is lowered at the same time as the refuse is introduced.

Accordingly, when refuse is pushed out, the surface height just after introduction is measured to be low correspondingly. As a result, the level change becomes low. Therefore, whether refuse is pushed out or not, can be judged by comparison of the weight and level change of refuse in the present introduction with the weights and level changes of refuse obtained in several times of refuse introduction in the past up to the preceding introduction. When the drying fire grate speed is controlled on the basis of this judgment, a measure counter to the sudden pushing of refuse can be made to prevent the over-supply of refuse onto the combustion fire grate to thereby keep the quantity of supply constant.

(2) According to another aspect of the present invention, in the combustion control method in a refuse incineration furnace as described in the above paragraph (1), the bulk density of introduced refuse at the time of introduction of refuse is calculated on the basis of the weight of refuse and the level change; a difference between the calculated bulk density and mean bulk density calculated in a plurality of times in the past up to the preceding time is obtained; and the drying fire grate speed is reduced or the drying fire grate is temporarily stopped when the difference is larger than a preset reference value parameter.

This is one aspect of means for comparing the weight and level change with the mean values in the past in the combustion control method shown in the aforementioned paragraph (1). When the weight of introduced refuse is divided by the level change, the apparent bulk density of the introduced refuse is calculated in the pipe-like hopper.

The bulk density thus calculated is compared with the mean bulk density obtained in several times of introduction in the past up to the preceding introduction. When refuse is pushed out, the level change is so small that the calculated bulk density becomes higher than the mean value.

When the difference between the calculated bulk density and the mean value in the past is larger than the reference value parameter, a decision is made that refuse is pushed out, and the fire grate speed is reduced or the fire grate is stopped temporarily. As the quantity of sudden over-supply caused by the pushing increases, the difference between the bulk density and the mean value becomes large. Accordingly, the quantity of correction of the drying fire grate speed or the stop time can be obtained on the basis of the size of the difference.

(3) According to a further aspect of the present invention, in the combustion control method in a refuse incineration furnace as described in the above paragraph (1), the drying fire grate speed is reduced or the drying fire grate is temporarily stopped when the difference between the level change and an estimated level difference which is calculated on the basis of the ratio of the weight of refuse to the mean bulk density of refuse is larger than a reference value parameter.

This is another aspect of means for comparing the weight and level change of refuse with the mean values in the past in the combustion control method shown in the aforementioned paragraph (1). When the ratio of the weight of introduced refuse to the mean bulk density in the past is obtained and divided by the sectional area of the hopper, the difference between levels before and after introduction as estimated ordinarily with respect to the weight of the introduced refuse at that time is calculated. When the level change between actually measured levels before and after introduction is smaller than the estimated level difference by the reference value parameter or more, a decision is made that refuse is pushed out, and the fire grate speed is reduced or the fire grate is stopped temporarily. The quantity of correction of the drying fire grate speed or the stop time can be obtained on the basis of the size of the difference.

Accordingly, in the present invention, even in the case where refuse on the drying fire grate is suddenly pushed out onto the combustion fire grate under the influence of dropping of refuse at the time of the introduction of refuse so that the quantity of supplied refuse becomes temporarily excessive, this state is detected on the basis of the level difference between levels before and after the introduction of refuse to thereby reduce the drying fire grate speed or stop the drying fire grate to make a measure counter to this state. Accordingly, the quantity of refuse on the combustion fire grate can be averaged immediately to stabilize combustion to thereby keep the quantity of produced steam stable. As described above, the effect of collecting the combustion heat energy of refuse effectively according to the present invention is large.

BRIEF DESCRIPTION OF THE DRAWINGS

Fig. 1 is a conceptual view of a refuse incineration furnace and its control system, in which a combustion control method in a refuse incineration furnace according to an embodiment of the present invention is applied;

Fig. 2 is a block diagram showing the processing steps of drying fire grate speed control using the linear density of introduced refuse in the drying fire grate speed control means depicted in Fig. 1;

Fig. 3 is a graph showing the relation between the measurement time and the linear density of refuse in results of the drying fire grate speed control using the linear density of introduced refuse in Fig. 2;

Fig. 4 is a graph showing the change of the quantity of produced steam in results of the drying fire grate speed control using the linear density of introduced refuse in Fig. 2;

Fig. 5 is a graph showing the relation between the measurement time and the linear density of refuse in results obtained by a conventional refuse quantitative supply method;

Fig. 6 is a graph showing the change of the quantity of produced steam in results obtained by the conventional refuse quantitative supply method;

Fig. 7 is a block diagram showing the processing steps of drying fire grate speed control using the level change of introduced refuse, in which a combustion control method in a refuse incineration furnace according to another embodiment of the present invention is applied;

Fig. 8 is a graph showing the relation between the measurement time and the linear density of refuse in results of the drying fire grate speed control using the level change of introduced refuse in Fig. 7;

Fig. 9 is a graph showing the change of the quantity of produced steam in results of the drying fire grate speed control using the level change of introduced refuse in Fig. 7;

Fig. 10 is a conceptual view of a refuse incineration furnace and its control system, in which a combustion control method in a refuse incineration furnace according to an embodiment not according to the present invention is applied;

Fig. 11 is a flow chart showing the processing steps for determining the set value of the quantity of combustion air in the control system depicted in Fig. 10;

Fig. 12 is a graph showing the relation between the set value of the temperature of combustion air and low calorific power for explaining the embodiment shown in Fig. 10;

Fig. 13 is a graph showing the characteristic of the concentration of $O_2$ in exhaust gas in results in the case where control is made by the embodiment shown in Fig. 10;

Fig. 14 is a graph showing the characteristic of the quantity of combustion air in results in the case where control is made by the embodiment shown in Fig. 10;

Fig. 15 is a graph showing the characteristic of the quantity of produced steam in results in the case where control is made by the embodiment shown in Fig. 10;

Fig. 16 is a graph showing the characteristic of the concentration of $O_2$ in exhaust gas in results in the case where control is made by a conventional produced steam quantity measuring method;

Fig. 17 is a graph showing the characteristic of the quantity of combustion air in results in the case where control is made by the conventional produced steam quantity measuring method;

Fig. 18 is a graph showing the characteristic of the quantity of produced steam in results in the case where control is made by the conventional produced steam quantity measuring method;

Fig. 19 is a graph showing the characteristic of the concentration of $O_2$ in exhaust gas in results in the case where control is made by a conventional method of measuring the concentration of $O_2$ in exhaust gas;

Fig. 20 is a graph showing the characteristic of the quantity of combustion air in results in the case where control is made by the conventional method of measuring the concentration of $O_2$ in exhaust gas; and

Fig. 21 is a graph showing the characteristic of the quantity of produced steam in results in the case where control is made by the conventional method of measuring the concentration of $O_2$ in exhaust gas.

BEST MODE FOR CARRYING OUT THE INVENTION

Embodiment 1

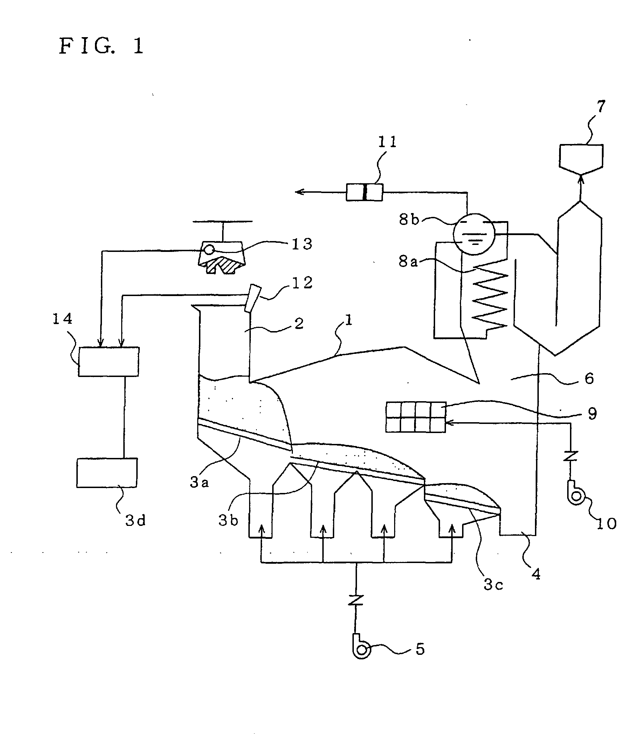

Fig. 1 is a conceptual view of a refuse incineration furnace and a control system therefor, in which a combustion control method in a refuse incineration furnace according to an embodiment of the present invention is applied. In the drawing, the reference numeral 1 designates a furnace; 2, a hopper; 3a, a drying fire grate; 3b, a combustion fire grate; 3c, an after-combustion fire grate; and 4, an ash drop port. Combustion air supplied by a combustion air blower 5 is blowing up from below these fire grates. Refuse introduced from the hopper 2 is dried in the drying fire grate 3a, burned in the combustion fire grate 3b and completely burned in the after-combustion fire grate 3c by the combustion air to form ash. The ash drops down through the ash drop port 4 to the outside of the furnace.

On the other hand, exhaust gas produced by combustion is led to a chimney 7 through a furnace outlet 6 and discharged to the outside of the furnace. A steam generation boiler 8b having a heat exchanger 8a is disposed in the furnace outlet through which exhaust gas is discharged. Cooling air from a cooling fan 10 is blowing in through a cooling air blowing port 9 to prevent the temperature of the inside of the furnace from rising excessively. The reference numeral 11 designates a flow meter for measuring the quantity of produced steam.

The reference numeral 14 designates a drying fire grate speed control means which receives a signal of a refuse gravimeter 13 and a signal of a refuse level meter 12 as input signals and outputs a speed signal to a drying fire grate driver 3d. For example, a computer is used for the drying fire grate speed control means 14 so that not only the weight of refuse and the level change of refuse are obtained on the basis of the measurement signal or the mean values in the past are calculated but also the following arithmetic operation for the controlled quantity is carried out to thereby output a drying fire grate speed signal.

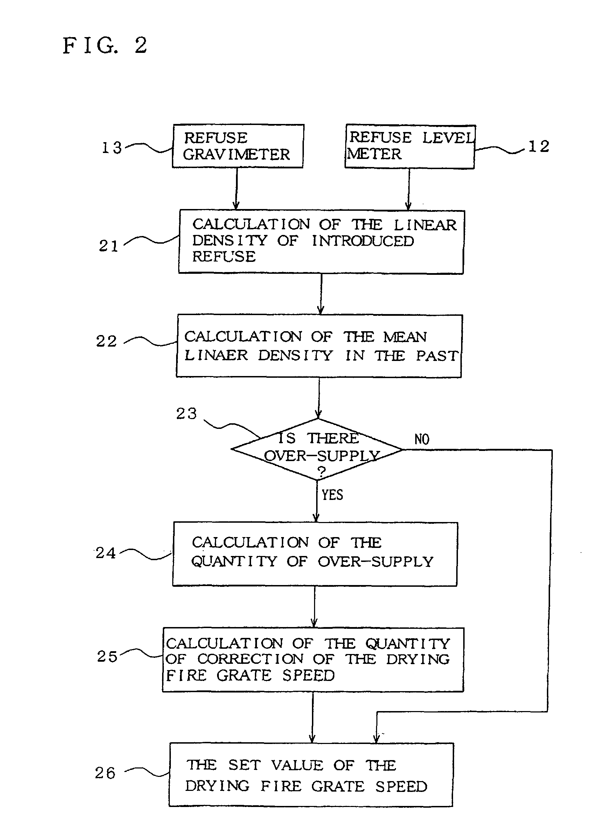

Referring to Fig. 2, an arithmetic operation for the controlled quantity will be described first in the case where the bulk density of introduced refuse and the mean bulk density of refuse in the past are compared with each other. The arithmetic operation will be described while taking as an example the case where the sectional area of the hopper is constant, that is, bulk density is replaced by linear density. In Fig. 2, the reference numeral 21 designates a block for calculating the linear density of introduced refuse. The linear density of refuse is calculated by the following expression (1) on the basis of the weight W of the refuse and the difference between the level $L_1$ of the refuse just before the introduction of the refuse and the level $L_2$ of the refuse just after the introduction of the refuse, that is, the level change of the refuse whenever the refuse is introduced.

$$\rho = W/(L_2 - L_1) \tag{1}$$

The reference numeral 22 designates a block for calculating the mean linear density of refuse in the past. In this block, linear density values of refuse obtained in $\underline{n}$ times of introduction of refuse in the past up to the preceding time are averaged by the following expression (2) to calculate the mean linear density $\rho_m$ of refuse.

$$\rho_m = (\rho_1 + \rho_2 + \cdots \rho_n)/n \qquad (2)$$

The subscript given to $\rho$ shows the number of times of introduction in the past. When the subscript is 1, there is expressed the linear density of refuse in the preceding introduction. When the subscript is $\underline{n}$, there is expressed the linear density of refuse in the introduction of $\underline{n}$ times before.

In a block 23, the linear density $\rho$ of refuse obtained in the present introduction of refuse is compared with the mean linear density $\rho_m$ in the past to thereby judge whether over-supply is made or not. When $(\rho - \rho_m)$ is larger than a set reference value parameter, a decision is made that over-supply is made and the situation goes to a next calculation block 24 to continue an arithmetic operation. When $(\rho - \rho_m)$ is smaller than the set reference value parameter, a decision is made that over-supply is not made and the situation goes to a block 26 to output a set value of drying fire grate speed determined on the basis of ordinary combustion control.

The block 24 is a block for calculating an over-supply quantity W'. The over-supply quantity W' is calculated by the following expression (3).

$$W'=W-(L_2-L_1) \, \rho_n \qquad (3)$$

In a block 25, a correction quantity, that is, a speed reduction rate $\underline{v}$ of the drying fire grate is calculated by the following expression (4) on the basis of the over-supply quantity W' and a drying fire grate speed correction parameter.

$$v = \beta(W'/W) \qquad (4)$$

In the expression, $\beta$ is the drying fire grate speed correction parameter. Further, the correction quantity is a quantity proportional to the over-supply ratio.

In the block 26, the set value Vs of the drying fire grate speed corrected on the basis of the correction quantity in the block 25 is calculated by the following expression (5).

$$Vs = Vs'(1 - v) \qquad (5)$$

In the expression, Vs' is drying fire grate speed determined on the basis of the target vaporization quantity set at the time of the introduction of refuse. The set value Vs of the drying fire grate speed thus obtained is outputted to the drying fire grate driver.

Although the aforementioned example shows the case where the drying fire grate speed is reduced in accordance with the over-supply quantity, the calculation of the drying fire grate speed correction quantity in the block 25 may be replaced by the calculation of drying fire grate stop time $t_1$ based on the following expression (6) to temporarily stop the drying fire grate.

$$t_1 = \gamma_1(W'/W_m) \qquad (6)$$

In the expression, $\gamma_1$ is a stop time parameter, and $W_m$ is the mean weight of refuse introduced in the past. The stop time $t_1$ is proportional to the over-supply ratio. In this case, the set value of the drying fire grate speed is once made to be zero and Vs' is set after the stop time $t_1$ is passed.

Although the judgment in the block 23 as to whether over-supply is made or not is made on the basis of whether the difference between the linear density $\rho$ of refuse and the mean linear density $\rho_m$ in the past is larger than the reference value parameter or not, the judgment may be made in accordance with the size of the ratio $(\rho/\rho_m)$ thereof. In this case, the value of the reference value parameter varies. Further, the reference value parameter varies in accordance with the equipment, the refuse quality, etc., so that the reference value parameter is required to be determined taking the locality, season, etc. into account even in the case where the same type equipment is used.

By using the refuse incineration furnace shown in Fig. 1, the drying fire grate speed was corrected on the basis of the comparison between the linear density of introduced refuse and the mean linear density in the past five times of refuse introduction. The change of the vaporized quantity of boiler water was examined. The arithmetic operation by the drying fire grate speed control means 14 was carried out as follows.

The difference between the linear density of introduced refuse obtained on the basis of the measurement of the level just before and just after the introduction of the refuse and the mean linear density in the past was compared with the reference value parameter to thereby correct the drying fire grate speed. First, two values were decided as the reference value parameter $\alpha$ for judging the degree of over-supply. That is, the two values were $\alpha_1$ = 0.15 and $\alpha_2$ = 0.25. When the difference between the linear density of refuse in the present introduction and the mean linear density was larger than $\alpha_1$ and not larger than $\alpha_2$, a decision was made that the degree of over-supply was ordinary. When the difference was larger than $\alpha_2$, a decision was made that the degree of over-supply was extraordinary. Further, when the linear density difference was larger than $\alpha_1$ and smaller than $\alpha_2$, the set value of the drying fire grate speed was obtained by the aforementioned expression (4) to perform correction. When the difference was larger than $\alpha_2$, that is, in the case of extraordinary over-supply, the drying fire grate was stopped and the stop time thereof was calculated.

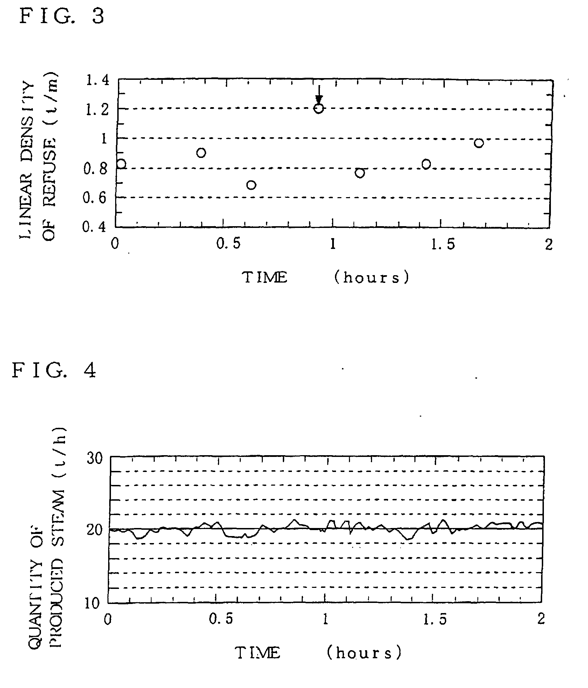

Referring to Figs. 3 and 4, the arithmetic operation will be described specifically. In Fig. 3, the symbol $\bigcirc$ designates the linear density of refuse obtained whenever the refuse is introduced. The linear density (shown by the arrow) of refuse introduced when about one hour was passed after the start of the measurement became large to be 1.2 t/m. The mean value obtained in the case of n = 5 was 0.85 t/m and the linear density difference was 0.35 t/m. Accordingly, because the linear density difference was larger than the reference value parameter 0.25 t/m, a decision was made that the degree of over-supply was extraordinary.

Accordingly, the stop time was calculated. The thought about the calculation of the stop time is as follows.

When the target incineration quantity corresponding to the required quantity of produced steam is R(t/h), the time t' required for supplying the over-supply quantity W' is expressed by the following expression (7).

$$t' = W'/R \qquad\qquad (7)$$

Accordingly, the drying fire grate may be stopped for the time t'. However, when the drying fire grate was stopped for the time actually, a rebound appeared so that the quantity of refuse on the combustion fire grate became short. Accordingly, the drying fire grate stop time $\underline{t}$ was obtained by the following expression (8) using a stop time parameter $\gamma$. $\gamma$ is a positive constant not larger than 1.

$$t = \gamma t' \qquad\qquad (8)$$

Specifically, calculation was carried out as follows. Because the level change $(L_2 - L_1)$ at the time of the introduction of refuse was 1.57 m, the over-supply quantity of refuse was estimated to be 0.55 t. Because the target incineration quantity R was 6 t/h, t' was 0.0917 hours, that is, 330 seconds. When 0.8 was used as the stop time parameter $\gamma$ to obtain the drying fire grate stop time $\underline{t}$, the stop time of 264 seconds was obtained.

The quantity of steam produced when the drying fire grate is controlled in the aforementioned manner is shown in Fig. 4. The time axis in Fig. 4 coincides with the time axis in Fig. 3, so that each time axis expresses the time which is passed after the start of the measurement. The linear density of refuse became high in the position indicated by the arrow in Fig. 3 as described above, but the vaporization quantity followed the target vaporization quantity 20 t/h within a change range of $\pm 2$ t/h regardless of the influence of the increase of the linear density as shown in Fig. 4. Accordingly, a stable operation was achieved.

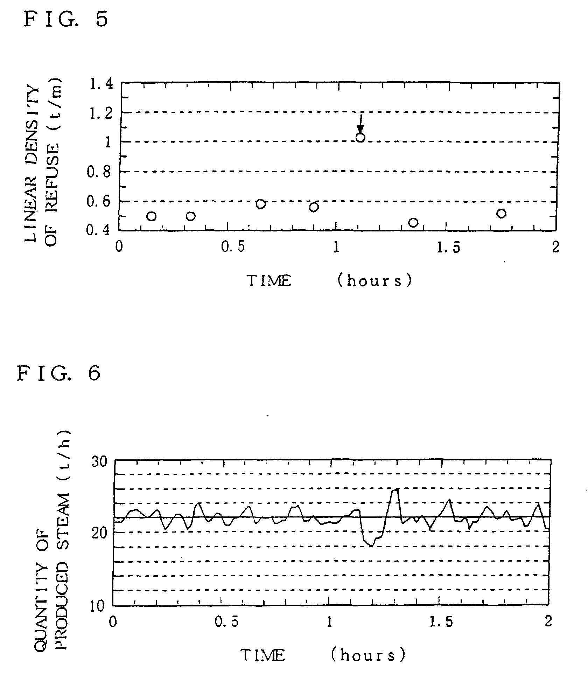

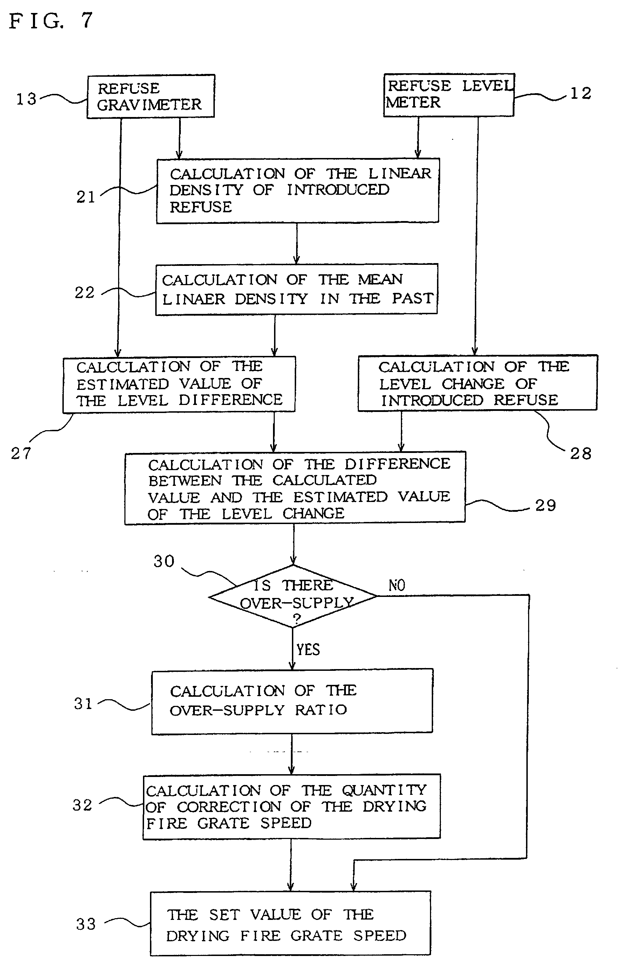

Results obtained in a conventional example for comparison are shown in Figs. 5 and 6. In the conventional combustion control method, the linear density of refuse became high in the position indicated by the arrow in Fig. 5, that is, an excessive quantity of refuse was supplied into the furnace. Accordingly, the temperature of the combustion zone was lowered on the basis of the influence of the supply of the excessive quantity of refuse, so that the vaporization quantity was temporarily reduced by 4 t/h with respect to the target vaporization quantity 22 t/h and then an excessive quantity of steam was reversely produced on the basis of the combustion of the excessive quantity of refuse, as shown in Fig. 6.

Embodiment 2

Referring to Fig. 7, an arithmetic operation for the controlled condition will be described below in the case where comparison is made on the basis of the difference between the ratio of the weight of introduced refuse to the mean linear density in the past and the level change. Fig. 7 is a block diagram showing the processing steps of the drying fire grate speed control using the level change of introduced refuse in the drying fire grate speed control means shown in Fig. 1. In Fig. 7, the calculation of the linear density of introduced refuse in a block 21 and the calculation of the mean linear density in the past in a block 22 are the same as in the previously-described case where the linear density of introduced refuse is compared with the mean value in the past.

In a block 27, the estimated value of the level difference is calculated. As this estimated value $L_s$, the ratio of the weight of introduced refuse to the mean value $\rho_m$ of linear density in $\underline{n}$ times in the past calculated in the block 22 is obtained by the following expression (9).

$$L_s = W/\rho_m \tag{9}$$

The level change $L_k$ of introduced refuse is calculated by the following expression (10) in a block 28.

$$L_k = L_2 - L_1 \tag{10}$$

In a block 29, the difference $\Delta L$ between the estimated value $L_s$ of the level difference of introduced refuse calculated in the block 27 and the level change (hereinafter referred to as "measured value") $L_k$ calculated in the block 28 on the basis of measured levels is obtained by the following expression (11).

$$\Delta L = L_s - L_k \tag{11}$$

In the previously-described case where comparison is made on the basis of the difference $(\rho - \rho_m)$ between the linear density of introduced refuse and the mean value of linear density in the past, both the weight of refuse and the level change are compared with the mean values thereof in the past. In the case of comparison using the difference $\Delta L$ between the estimated value and the measured value, however, only the level change is compared with the mean value thereof in the past. In the former case, deviations are included in a subject of comparison when the bulk density of refuse deviates from the mean value. In the latter case, comparison is made so that only the quantity of pushing-out is grasped more accurately because the deviations are cancelled.

In a block 30, the difference $\Delta L$ between the estimated value and the measured value of the level difference is compared with a reference value parameter $\Delta L_p$. When $\Delta L$ is larger than $\Delta L_p$, a decision is made that refuse is pushed out, and the situation goes to a block 31. When $\Delta L$ is contrariwise not larger than $\Delta L_p$, a decision is made that refuse is normally introduced without pushing, and the situation goes to a block 33 to output the set value of the drying fire grate speed determined on the basis of ordinary combustion control.

In the block 31, the refuse over-supply ratio is calculated on the basis of $\Delta L$ obtained in the expression (9). The over-supply ratio V' is calculated by the following expression (12).

$$V' = S\Delta L \tag{12}$$

Then, in a block 32, the drying fire grate speed correction quantity $\varepsilon V$ proportional to the over-supply ratio V' is obtained by use of a drying fire grate speed correction parameter $\varepsilon$. Further, in the block 33, the set value $V_s$ of the drying fire grate is calculated by the expression (11).

$$V_s = V_s'(1 - \varepsilon V') \tag{13}$$

The drying fire grate speed $V_s$ thus obtained is outputted from the drying fire grate speed control means to the drying fire grate speed driver.

Although the aforementioned example shows the case where the drying fire grate speed is reduced in accordance with the quantity of over-supply, the calculation of the drying fire grate speed correction quantity in the block 32 may be replaced by the calculation of the drying fire grate stop time $t_2$ by use of the expression (14) so that the drying fire grate can be temporarily stopped.

$$t_2 = \gamma_2'(\Delta L/L_s) \tag{14}$$

In this expression, $\gamma_2$ is a stop time parameter. The stop time $t_2$ is proportional to the over-supply ratio in the same manner as in the aforementioned case where the linear density of the introduced refuse is compared with the mean value in the past. In this case, the set value of the drying fire grate speed is set to zero once and to $V_s'$ after the passage of the stop time $t_2$ in the same manner as in the above description.

Incidentally, also when the estimated value of the level difference is compared with the measured value thereof, not only the difference $\Delta L$ between the two values can be used for the comparison but also the ratio $L_s/L_k$ between the two values can be used to be compared with a reference value parameter as described above.

By using the refuse incineration furnace shown in Fig. 1, the linear density of introduced refuse was compared with the mean value of linear density in five times of introduction in the past to thereby correct the drying fire grate speed. The change of the quantity of vaporized boiler water was examined. The arithmetic operation in the drying fire grate speed control means 14 was carried out as follows.

The difference $\Delta L$ between the estimated value $L_s$ of the level difference and the measured value $L_k$ of the level change at the time of the introduction of refuse was compared with the reference value parameter $\Delta L_p$ to thereby control the drying fire grate speed.

First, two values were decided as the reference value parameter for judging the over-supply in the same manner as in an example in the aforementioned embodiment 1. The two values were $\Delta L_{p1} = 0.5$ m and $\Delta L_{p2} = 1.5$ m. When $\Delta L$ was larger than $\Delta L_{p1}$ and not larger than $\Delta L_{p2}$, a decision was made that the degree of over-supply was ordinary. When $\Delta L$ was larger than $\Delta L_{p2}$, a decision was made that the degree of over-supply was extraordinary. In the case where the degree of over-supply was ordinary, the set value of the drying fire grate speed was obtained by the expression (13) to perform correction. In the case where the degree of over-supply was extraordinary, the drying fire grate was stopped and the stop time thereof was calculated by the expression (14).

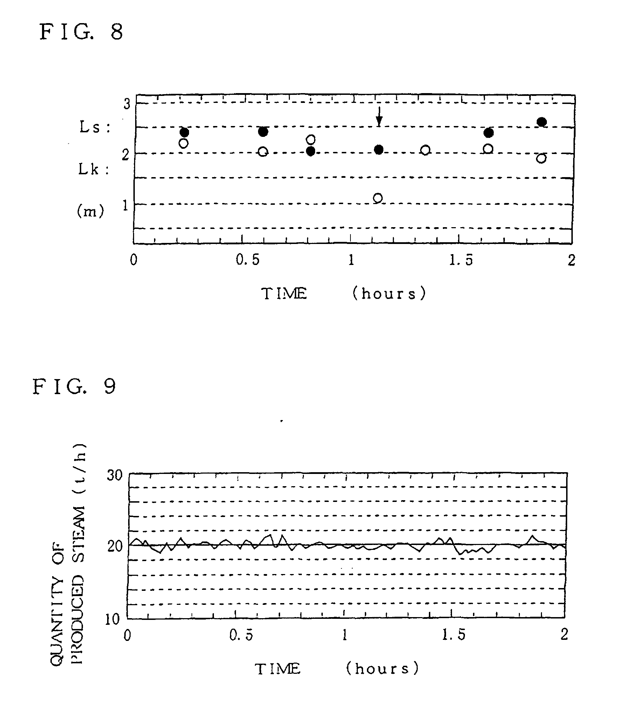

A specific example will be described below with reference to Figs. 8 and 9. In Fig. 8, the symbol ● shows the estimated value $L_s$ of the level difference, and the symbol ○ shows the measured value thereof. At the time of point (represented by the arrow in the drawing) when an hour was passed after the start of the measurement, the estimated value $L_s$ was 2.2 m and the measured value $L_k$ was 1.2 m. The difference $\Delta L$ between the two values was 1 m. Because $\Delta L$ was larger than $\Delta L_{p1}$ and smaller than $\Delta L_{p2}$, a decision was made that the degree of over-supply was ordinary. Accordingly, the quantity of reduction of the drying fire grate speed was calculated.

The over-supply ratio V'calculated by the expression (12) was 0.45. The drying fire grate speed correction parameter $\varepsilon$ used was 0.8. A result that the set value of the drying fire grate speed was 0.64 times as much as the speed $V_s'$ determined at the time of the introduction of refuse was obtained from the expression (13).

The quantity of steam produced when the drying fire grate is controlled in the aforementioned manner is shown in Fig. 9. The time axis in Fig. 9 coincides with the time axis in Fig. 8. Each time axis shows the time passed after the start of the measurement. As described above, at the point expressed by the arrow in Fig. 8, the measured value $L_k$ of the level change was so small that the difference between the estimated value $L_s$ and the measured value $L_k$ was large. That is, the pushing of refuse was detected. However, as shown in Fig. 9, the quantity of produced steam followed the target quantity 20 t/h of vaporization within a sufficiently narrower change range than ±2 t/h without any influence of the pushing of refuse, so that a stable operation was achieved.

Embodiment 3

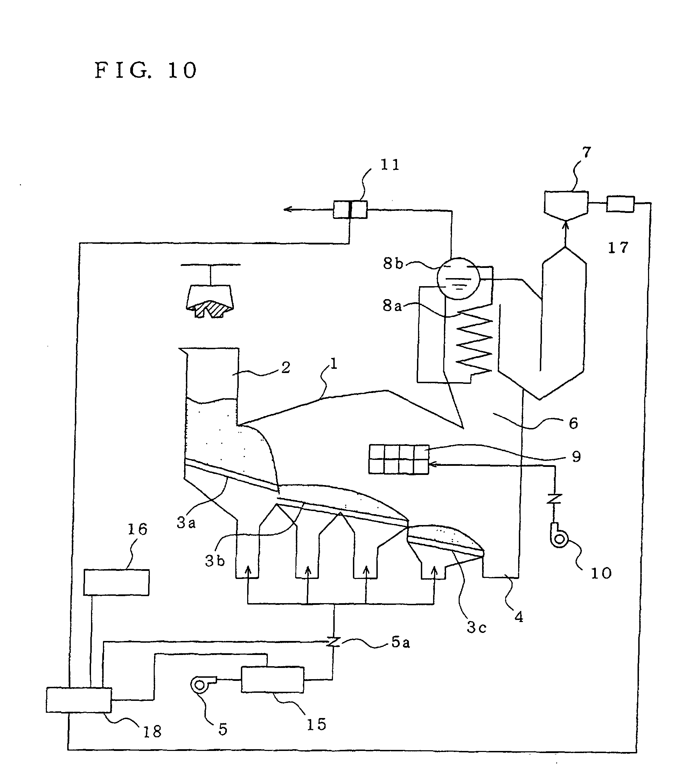

Fig. 10 is a conceptual view of a refuse incineration furnace and its control system, in which a combustion control method in a refuse incineration furnace according to an embodiment not of the present invention is applied. In Fig. 10, the reference numeral 1 designates an incineration furnace which has a hopper 2, a drying fire grate 3a, a combustion fire grate 3b, an after-combustion fire grate 3c, and an ash drop port 4. Combustion air from a combustion air blower 5 is delivered to a heater 15 and blown up through a combustion air dumper 5a from below the respective fire grates. Refuse is mainly dried in the drying fire grate 3a by combustion air blown up from below the drying fire grate 3a. The refuse is burned in the combustion fire grate 3b. The refuse is burned out to ashes in the after-combustion fire grate 3c.

On the other hand, exhaust gas produced by combustion is led through a furnace exit 6 to a chimney 7 and discharged out of the furnace. When exhaust gas is discharged, the concentration of $O_2$ is measured by an $O_2$ concentration meter 17. Incidentally, cooling air fed from a cooling air fan 10 is blown in through a cooling air blowing port 9 to prevent the temperature of the inside of the furnace from raising excessively.

A boiler 8b having a heat exchanger 8a is disposed in the furnace exit 6 through which exhaust gas is discharged. The quantity of produced steam is measured by a flow meter 11.

The reference numeral 18 designates a combustion control means which deeply relates to the present invention. The combustion control means 18 receives signals from the flow meter 11 and the $O_2$ concentration meter 17 as input signals, calculates a set value of combustion air quantity and outputs a signal to the combustion air dumper 5a. Further, the combustion control means 18 receives a signal from a low calorific power arithmetic unit 16, calculates the temperature of combustion air and outputs a temperature signal to the heater 15. For example, a computer is used as the combustion control means 18.

The calculation of control values by the combustion control means 18 is performed in a predetermined period, and the procedure thereof is as follows.

A method of controlling the quantity of combustion air by use of the measured value of the concentration of $O_2$ in exhaust gas will be described first. As described above, the concentration of $O_2$ in exhaust gas and the excess air ratio have the relation expressed by the expression (21) so that they can be replaced by each other. Accordingly, the method will be described as an example using the excess air ratio. The excess air ratio $\lambda_{(k)}$ is calculated on the basis of the measured value of the concentration of $O_2$ in exhaust gas by the following expression (22):

$$\lambda_{(k)} = 0.21/\{0.21 - [O_2]_{(k)}\} \qquad (22)$$

in which the subscript (k) indicates a currently measured value.

Further, values calculated in several times in the past up to the present time are smoothed by the following expression (23) to calculate the smoothed value $\lambda_{m(k)}$ of the excess air ratio.

$$\lambda_{m(k)} = \{ \lambda_{(k)} + \lambda_{(k-1)} + \cdots + \lambda_{(k-n+1)}\}/n \qquad (23)$$

On the other hand, the measured value V of the quantity of produced steam and the target quantity $V_0$ of produced steam are given to a PID controller and compared with each other to thereby calculate the target quantity $F_1$ of combustion air based on the quantity of produced steam in accordance with the expression (24).

$$F_1 = (100/PB)[1 + \{1/(T_i S)\} + T_d S](V_0 - V) \qquad (24)$$

In this expression, PB, $T_i$ and $T_d$ express the proportional gain, the integral gain and the differential gain respectively as tuning parameters, and S expresses the Laplace operator. $F_1$ is the quantity of combustion air in which the target quantity $V_0$ of produced steam ought to be obtained when the state of refuse is normal.

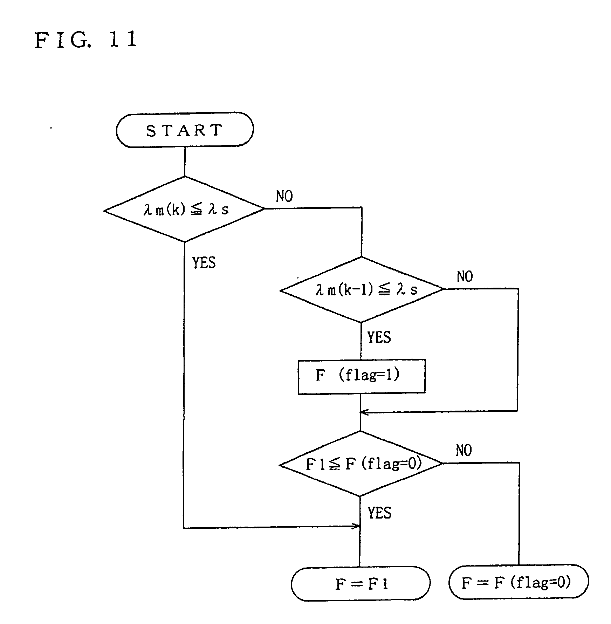

Then, judging from $\lambda_{m(k)}$ obtained by the aforementioned expression (23), the set value F of the quantity of combustion air is determined finally. The processing steps for determining the set value F of the quantity of combustion air are shown in Fig. 11.

First, the smoothed value $\lambda_{m(k)}$ of the excess air ratio is compared with the upper limit value $\lambda_s$ of the excess air ratio which is determined in advance. The upper limit value $\lambda_s$ of the excess air ratio is suitably determined within a range of from about 1.5 to about 2. When $\lambda_{m(k)}$ is not larger than $\lambda_s$, the set value F of the quantity of combustion air is determined to be $F_1$.

When $\lambda_{m(k)}$ is larger than $\lambda_s$, $F_1$ is compared with the temporarily set quantity F (flag = 0) of combustion air which is temporarily stored. When $F_1$ is smaller than F (flag = 0), the set value F of the quantity of combustion air is determined to be $F_1$. When $F_1$ is larger than F (flag = 0), the set value F of the quantity of combustion air is determined to be F (flag = 0). The temporarily set quantity F (flag = 0) of combustion air is a target quantity of combustion air in the case where the smoothed value $\lambda_m$ of the excess air ratio first reaches the upper limit value.

Incidentally, in this stage, whether the smoothed value $\lambda_{m(k-1)}$ of the excess air ratio in the preceding time is not larger than $\lambda_s$ is examined. When $\lambda_{m(k-1)}$ is not larger than $\lambda_s$, the target quantity of combustion air in the present time is temporarily stored as the temporarily set quantity F (flag = 1) of combustion air. By this arithmetic operation, the temporarily set quantity of combustion air is not changed when the smoothed value of the excess air ratio is continuously larger than the upper limit value of the excess air ratio, but the temporarily set quantity of combustion air is updated when the smoothed value of the excess air ratio is once reduced to be not larger than the upper limit value of the excess air ratio and then exceeds the upper limit value of the excess air ratio again. Further, in the next arithmetic operation, F (flag = 1) substituted for F (flag = 0) is used. Accordingly, the temporarily set quantity of combustion air is determined in accordance with the degree of abnormality in the properties of refuse in this occasion.

The case where the quantity of combustion air and the temperature of combustion air are controlled simultaneously will be described below. When the smoothed value $\lambda_{m(k)}$ of the excess air ratio is not larger than the upper limit value $\lambda_s$, the set value $T_{FSET}$ of the temperature of combustion air based on the expression (25) is fed from the combustion control means 16 to the heater 12 by which the temperature of combustion air is controlled so as to take the set value $T_{FSET}$. Also when the measured value of the concentration of $O_2$ in exhaust gas is not larger than the upper limit value, the same control is made.

$$T_{FSET} = T_F(Hu) \qquad (25)$$

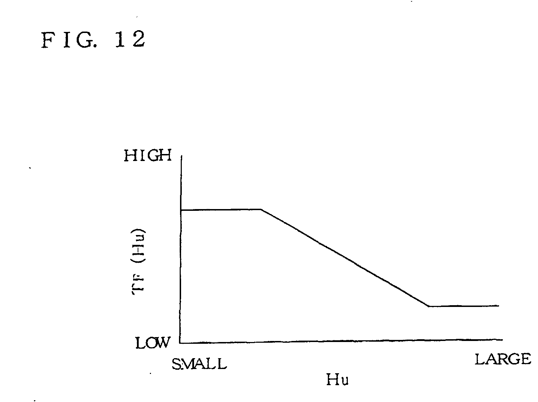

The set value TFSET of the temperature of combustion air is a function $T_F(Hu)$ of low calorific power Hu, for example, a function shown in Fig. 12. When low calorific power (Hu) is low, the temperature $T_F$ of combustion air is set to be high. When low calorific power (Hu) is high, the temperature $T_F$ of combustion air is set to be low.

When the smoothed value $\lambda_{m(k)}$ of the excess air ratio is larger than the upper limit value $\lambda_s$, the set value TFSET of the temperature of combustion air based on the expression (26) is fed from the combustion control means 16 to the heater 12 by which the temperature of combustion air is controlled so as to take the set value $T_{FEST}$. When the measured value $[O_2]_{(k)}$ of the concentration of $O_2$ in exhaust gas is larger than the upper limit value $[O_2]_s$, the set value $T_{FSET}$ of the temperature of combustion air is obtained on the basis of the expression (27).

$$T_{FSET} = T_F(Hu) + K_{TF1}\{\lambda_{m(k)} - \lambda_s\} \qquad (26)$$

$$T_{FSET} = T_F(Hu) + K_{TF2}\{[O_2]_{(k)} - [O_2]_s\} \qquad (27)$$

In the expressions, $K_{TF1}$ and $K_{TF2}$ are proportional gain control parameters. Further, the expression (27) is an expression in which the smoothed value $\lambda_{m(k)}$ of the excess air ratio and the upper limit value $\lambda_s$ thereof in the expression (26) are replaced by the measured value $[O_2]_{(k)}$ of the concentration of $O_2$ in exhaust gas and the upper limit value $[O_2]_s$ thereof respectively.

The incineration of refuse was performed by using the system shown in Fig. 10, and the concentration of $O_2$ in exhaust gas, the quantity of combustion air and the quantity of produced steam were examined. The target quantity of produced steam was 20 t/h and the upper limit of the concentration of $O_2$ in exhaust gas was 9 %. The measurement was made continuously. Measured values were picked up at intervals of 30 seconds and the calculation of the set value of the quantity of combustion air was performed in accordance with the processing steps shown in Fig. 11 to thereby control the quantity of combustion air.

The examination was performed also for the produced steam quantity measuring method and the exhaust gas $O_2$ concentration measuring method. Results thereof were compared.

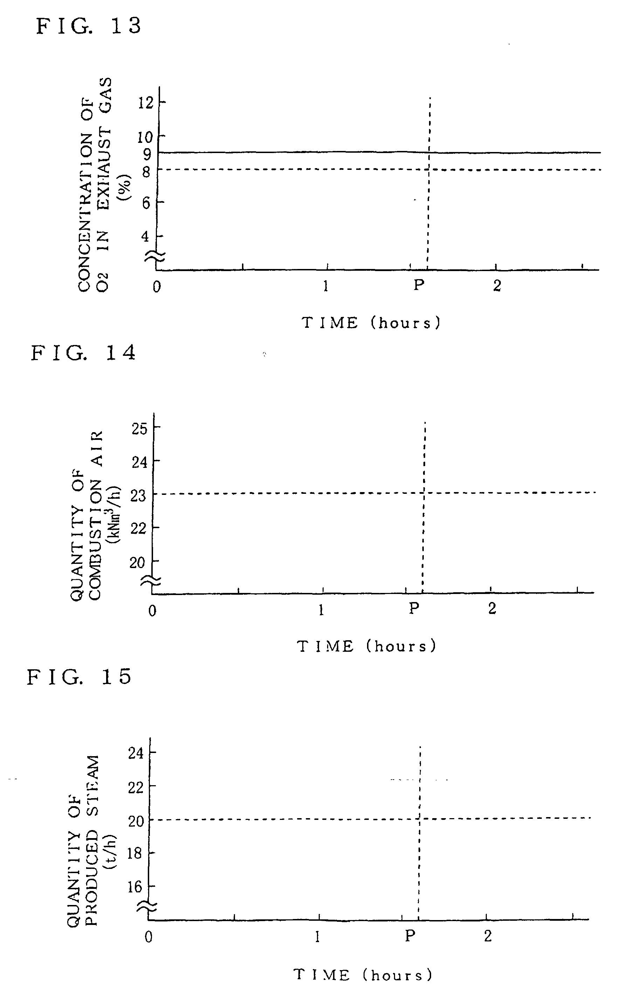

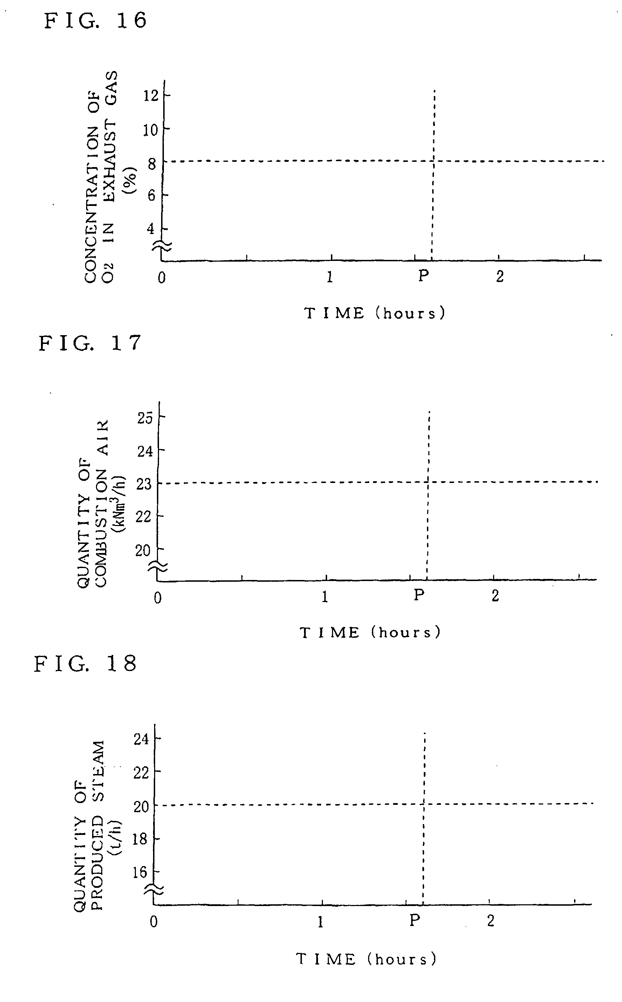

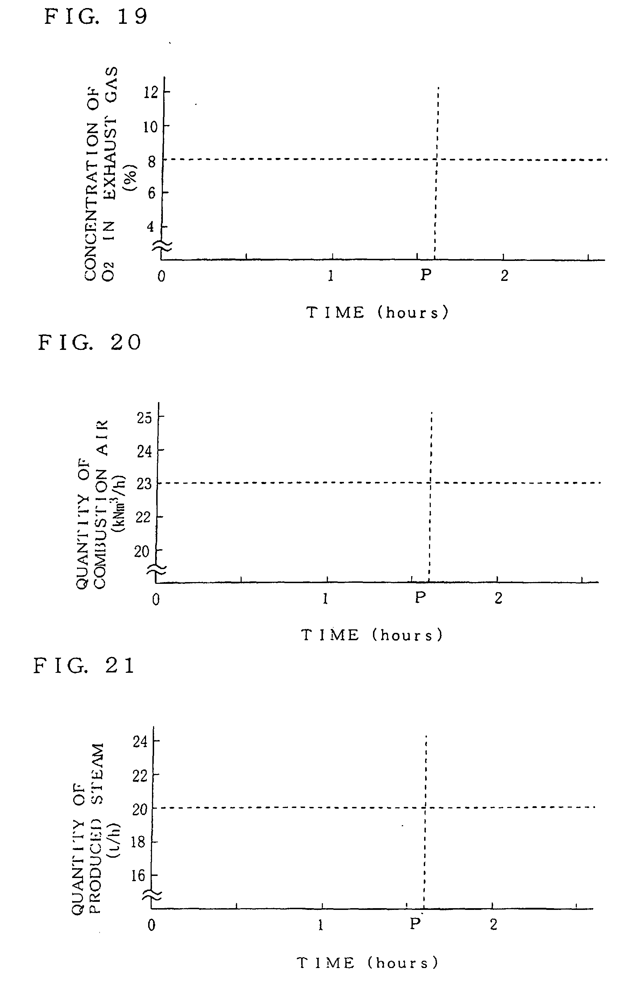

Figs. 13 to 15 show results of execution of this embodiment. Figs. 16 to 18 show results in the produced steam quantity measuring method. Figs. 19 to 21 show results in the $O_2$ concentration measuring method. In each of Figs. 13, 16 and 19, the change of the concentration of $O_2$ in exhaust gas is shown. In each of Figs. 14, 17 and 20, the change of the quantity of combustion air is shown. In each of Figs. 15, 18 and 21, the change of the quantity of produced steam is shown.

In this embodiment, the quantity of combustion air was controlled to coincide with the temporarily set quantity of combustion air at the point P of time when not only the concentration of $O_2$ in exhaust gas increased temporarily but also the quantity of produced steam decreased. As a result, the decreased quantity of produced steam was recovered soon.

On the other hand, in the produced steam quantity measuring method, the quantity of combustion air was increased at the point P of time, so that refuse was cooled. As a result, the quantity of produced steam was reduced continuously, so that the recovery of the quantity of produced steam was delayed extremely. Further, in the $O_2$ concentration measuring method, the quantity of combustion air was reduced at the point P of time, so that the drying of refuse was delayed. As a result, the reduction of the quantity of produced steam was not continued so much compared with the produced steam quantity measuring method, but the same long time as in the produced steam quantity measuring method was required for recovery.

## Claims

**1.** A combustion control method in a refuse incineration furnace (1), including the steps of: obtaining the weight of introduced refuse and the level change between levels before and after introduction of refuse on the basis of values measured by means of a refuse gravimeter (13) attached to a refuse-introduction crane and a refuse level meter for measuring the surface height of refuse in a refuse in a refuse incineration furnace hopper; and controlling the speed of a drying fire grate (3a) for feeding refuse into the furnace, **characterized by** controlling said speed on the basis of a result of comparison of the thus obtained weight and level change of refuse with those obtained in a plurality of times in the past up to the preceding time.

2. A combustion control method in a refuse incineration furnace according to Claim 1, wherein: the bulk density of introduced refuse at the time of introduction of refuse is calculated on the basis of the weight of refuse and the level change; a difference between the calculated bulk density and mean bulk density calculated in a plurality of times in the past up to the preceding time is obtained; and the drying fire grate speed is reduced or the drying fire grate (3a) is temporarily stopped when the difference is larger than a preset reference value parameter.

3. A combustion control method in a refuse incineration furnace according to Claim 1, wherein the drying fire grate speed is reduced or the drying fire grate (3a) is temporarily stopped when the difference between the level change and an estimated level difference which is calculated on the basis of the ratio of the weight of refuse to the mean bulk density of refuse is larger than a reference value parameter.

**Patentansprüche**

1. Verfahren zur Verbrennungsregelung eines Abfall-Verbrennungsofens (1), welches folgende Schritte beinhaltet:

   - Ermittlung des Gewichtes des zugeführten Abfalls und der Füllstandsveränderung zwischen den Pegeln vor und nach der Zuführung des Abfalls auf der Basis von Werten, die mittels eines Abfall-Gravimeters (13), welches an einem Abfall-Beschickungskran angebracht ist, und eines Abfall-Füllstandsmessers zur Messung der Oberflächenhöhe des Abfalls einer Schüttung in einem Abfall-Verbrennungsofen gemessen werden; und
   - Regelung der Geschwindigkeit eines Trocknungsrostes (3a) zur Zuführung von Abfall in den Ofen,

   **gekennzeichnet durch** die Regelung der Geschwindigkeit auf der Basis eines Ergebnisses des Vergleiches des derart erhaltenen Gewichtes und der Füllstandsveränderung des Abfalls mit den Werten, die mehrfach in der Vergangenheit bis zum vorhergehenden Zeitpunkt erhalten wurden.

2. Verfahren zur Verbrennungsregelung eines Abfall-Verbrennungsofens nach Anspruch 1, worin:

   - die Schüttdichte des zugeführten Abfalle zur Zeit der Zuführung von Abfall auf der Basis des Gewichts des Abfalls und der Füllstandsveränderung berechnet wird;
   - eine Differenz erhalten wird zwischen der berechneten Schüttdichte und der durchschnittlichen Schüttdichte, die mehrfach in der Vergangenheit bis zum vorhergehenden Zeitpunkt berechnet würde, und
   - die Geschwindigkeit des Trocknungsrostes reduziert wird oder der Trocknungsrost (3a) vorübergehend angehalten wird, wenn die Differenz größer ist als ein vorgegebener Referenzwert eines Parameters.

3. Verfahren zur Verbrennungsregelung eines Abfall-Verbrennungsofens nach Anspruch 1, worin die Geschwindigkeit des Trocknungsrostes reduziert wird oder der Trocknungsrost (3a) vorübergehend angehalten wird, wenn die Differenz zwischen der Füllstandsveränderung und einer geschätzten Füllstandsdifferenz, welche auf der Basis des Verhältnisses des Abfallgewichtes zur mittleren Schüttdichte des Abfalls berechnet worden ist, größer ist als ein Referenzwert eines Parameters.

**Revendications**

1. Procédé de régulation de combustion dans un four d'incinération de déchets (1), comprenant les étapes d'obtention du poids de déchets introduits et du changement de niveau entre les niveaux avant et après introduction de déchets sur la base des valeurs mesurées au moyen d'un gravimètre de déchets (13) fixé à une grue d'introduction de déchets et un appareil de mesure du niveau de déchets pour mesurer la hauteur de la surface de déchets dans une trémie de four d'incinération de déchets; et de régulation de la vitesse de la grille de foyer (3a) de séchage pour introduire des déchets dans le four (1), **caractérisé par** la régulation de ladite vitesse sur la base d'un résultat de comparaison du poids ainsi obtenu et du changement de niveau de déchets avec ceux obtenus à une pluralité de moments dans le passé jusqu'au moment précédent.

2. Procédé de régulation de combustion dans un four d'incinération de déchets selon la revendication 1, dans lequel la masse volumique apparente de déchets introduits au moment de l'introduction des déchets est calculée sur la base du poids de déchets et du changement de niveau; une différence entre la masse volumique apparente calculée et la masse volumique apparente moyenne calculée à une pluralité de moments dans le passé jusqu'au moment précédent est obtenue; et la vitesse de la grille de foyer de séchage est réduite ou la grille de foyer (3a) de séchage est arrêtée momentanément lorsque la différence est supérieure à un paramètre de valeur de référence préétabli.

3.  Procédé de régulation de combustion dans un four d'incinération de déchets selon la revendication 1, dans lequel la vitesse de la grille de foyer de séchage est réduite ou la grille de foyer (3a) de séchage est momentanément arrêtée lorsque la différence entre le changement de niveau et une différence de niveau estimée qui est calculée sur la base du rapport du poids de déchets à la masse volumique apparente moyenne de déchets est supérieure à un paramètre de valeur de référence.

FIG. 1

F I G. 2

```
13 ── REFUSE              REFUSE LEVEL ── 12
        GRAVIMETER         METER

                    │                    │
                    ▼                    ▼
21 ──   CALCULATION OF THE LINEAR
        DENSITY OF INTRODUCED
        REFUSE

                         │
                         ▼
22 ──   CALCULATION OF THE MEAN
        LINAER DENSITY IN THE PAST

                         │
                         ▼
23 ──        ◇ IS THERE             NO
             OVER-SUPPLY ──────────────┐
                 ? ◇                    │
                 │ YES                  │
                 ▼                      │
24 ──   CALCULATION OF THE             │
        QUANTITY OF OVER-SUPPLY        │
                 │                      │
                 ▼                      │
25 ──   CALCULATION OF THE QUANTITY    │
        OF CORRECTION OF THE DRYING    │
        FIRE GRATE SPEED               │
                 │                      │
                 ▼         ▼
26 ──   THE SET VALUE OF THE
        DRYING FIRE GRATE SPEED
```

F I G. 3

F I G. 4

FIG. 5

FIG. 6

EP 0 943 864 B1

FIG. 7

18

FIG. 8

FIG. 9

FIG. 10

F I G. 11

START

$\lambda m(k) \leqq \lambda s$ — NO

YES

$\lambda m(k-1) \leqq \lambda s$ — NO

YES

F (flag=1)

$F 1 \leqq F$ (flag=0) — NO

YES

$F = F 1$

$F = F$ (flag=0)

FIG. 12

F IG. 13

FIG. 14

FIG. 15

FIG. 16

FIG. 17

FIG. 18

F IG. 19

FIG. 20

F IG. 21